# EUROPÄISCHE PATENTANMELDUNG

(11) **EP 1 281 740 A1**
(43) Veröffentlichungstag der Anmeldung: **05.02.2003**
(21) Anmeldenummer: 01117750.8
(22) Anmeldetag: 31.07.2001
(51) Int. Cl.: C09J 175/04, C09J 183/04, C09K 3/10

(54) **Silikonfluid enthaltende Dichtstoffe**

(71) Anmelder: Sika AG, vorm. Kaspar Winkler & Co., CH-8048 Zürich (CH)
(72) Erfinder: Pfenninger, Ueli, 8804 Au (CH); Onouha, Ukiwo, 8303 Bassersdorf (CH); Stadelmann, Ursula, 8046 Zürich (CH)
(74) Vertreter: Blum, Rudolf Emil Ernst

(57) **Zusammenfassung**

Beschrieben wird ein Kleb- und Dichtstoff, der sich insbesondere für das Abdichten und Verkleben von Bauteilen eignet.

Der Kleb- oder Dichtstoff enthält
a) mindestens ein silanvernetzendes Polyurethan Polymer,
b) ein Silikonfluid, bestehend aus einem nichtreaktiven Polydimethylsiloxan, sowie
c) mindestens einen siliziumfreien Weichmacher für Polyurethan, wobei die Komponenten a) bis c) in bestimmten Verhältnissen vorliegen.

## Beschreibung

Die vorliegende Erfindung betrifft einkomponentige flexible Kleb- und Dichtstoffe für das Abdichten und Verkleben von Bauteilen, insbesondere Kleb- und Dichtstoffe auf Silanbasis.

Einkomponentige flexible Kleb- und Dichtstoffe für das Abdichten und Verkleben von Bauteilen sind auf dem Markt bekannt und weit verbreitet für verschiedenste Anwendungen. Es sind pastöse Materialien, welche unter Ausschluss von Feuchtigkeit aufbewahrt werden, und nach der Applikation über eine Reaktion mit Luftfeuchtigkeit zum elastischen Endprodukt vernetzen. Für deren Verwendung als Dichtstoff auf dem Bau sind ganz spezielle Eigenschaften wichtig um den Anforderungen der Praxis zu genügen. Einerseits müssen sie besonders leicht aus der Kartusche auspressbar sein, da auf dem Bau üblicherweise ohne die Hilfe von Pressluft gearbeitet wird. Die frische Dichtstoffoberfläche muss sich mit einem Spatel oder mit dem Finger und Seifenwasser gut modellieren und abglätten lassen, ohne zu kleben und zu schmieren. Andererseits muss der ausgehärtete Dichtstoff eine möglichst trockene Oberfläche aufweisen, damit kein Staub auf der Fugenoberfläche kleben bleibt und zu Verunreinigungen führt. Er muss hervorragend auf verschiedenen Materialien haften, insbesondere Beton, Naturstein, Holz, Glas, PVC, Aluminium und anderen, welche üblicherweise im Bau eingesetzt werden. Er muss weichelastisch und sehr flexibel sein, um Bewegungen der Fuge mitzumachen, ohne zuviel Kraft auf die Fugenflanken zu übertragen. Bewegungen von Fugen im Bau entstehen durch Erschütterungen, sowie durch den Einfluss der Temperatur auf die Bauteile. Bei hohen Temperaturen dehnen sich die Bauteile aus, dementsprechend wird die Fuge schmaler. Bei tiefen Temperaturen ziehen sich die Baumaterialien zusammen, wodurch die Fuge breiter wird. Der Dichtstoff in den Fugen wird dementsprechend gedehnt und gestaucht. Ein Baudichtstoff muss sowohl ein tiefes Elastizitätsmodul als auch ein gutes Rückstellvermögen aufweisen, damit er sich leicht dehnen lässt und anschliessend auch wieder gut regenerieren kann. Je nach verwendeter Polymerbasis kann es schwierig sein, einen Dichtstoff zu formulieren, welcher genügend weich für die Anwendung in Bewegungsfugen ist und gleichzeitig eine schön trockene Oberfläche aufweist. Um einen Dichtstoff weichelastischer zu machen, können ein Teil der Polymerketten abgeblockt werden, oder der Anteil Weichmacher kann erhöht werden. Beides kann jedoch die Klebrigkeit der Oberfläche erhöhen. Zudem verschlechtert ein Abblokken der Ketten das Rückstellvermögen, und ein Erhöhen des Weichmacheranteils verschlechtert die Haftungseigenschaften des Dichtstoffes.

Es gibt verschiedene Polymertypen, mit welchen sich einkomponentige flexible Baudichtstoffe formulieren lassen. Weit verbreitet sind Baudichtstoffe auf der Basis von Polyurethan, welche durch die Reaktion ihrer Isocyanat-Endgruppen mit Luftfeuchtigkeit vernetzen. Auf dieser Basis ist es möglich, die genannten Eigenschaften gut zu erfüllen. Dichtstoffe auf der Basis isocyanat-vernetzender Polyurethane weisen jedoch den Nachteil auf, dass der Anwender mit potentiell gesundheitsschädlichen Isocyanaten in Berührung kommt. Deshalb verlangt der Markt nach isocyanatfreien Alternativen.

Ebenfalls seit langem bekannt sind Dichtstoffe auf der Basis von Silikon-Polymeren. Die Anforderungen an die Dehnbarkeit eines Baudichtstoffes für Bewegungsfugen sind für die Silikon-Polymere im allgemeinen aber zu hoch, da diese im gedehnten Zustand eine schlechte Weiterreissfestigkeit aufweisen.

Seit einiger Zeit auf dem Markt sind Baudichtstoffe auf der Basis von sogenannten MS-Polymeren, wobei "MS" für "modified silicone" steht. Es handelt sich dabei um Polymere, welche aus Polyetherketten mit Silanendgruppen bestehen, hergestellt durch die Hydrosilylierung von endständigen Doppelbindungen. Die Silanendgruppen bestehen aus einem an die Polyetherkette gebundenen Silizium, an welches zwei Alkoxygruppen und eine Alkylgruppe gebunden sind. Durch die Reaktion mit Feuchtigkeit hydrolysieren die Alkoxygruppen zu Alkoholen, und die entstandenen Si-OH Gruppen kondensieren anschliessend zu Si-O-Si Bindungen. Die Herstellung von MS-Polymeren ist beschrieben in US 3 971 751 von Kaneka. Baudichtstoffe auf der Basis von MS-Polymeren sind ebenfalls beschrieben, beispielsweise in US 5 541 266 von Kaneka und in US 5 013 807 von Toshiba Silicone. Diese Baudichtstoffe sind zwar wesentlich besser in ihren mechanischen Eigenschaften als die Silikon-basierten, sie weisen jedoch den Nachteil auf, dass ihre Oberfläche recht klebrig und das Rückstellvermögen eher schlecht ist. Eine höhere Vernetzung des Polymers durch den Einbau dreiwertiger Silanendgruppen (also Silicium mit drei Alkoxygruppen an den Kettenenden) würde diese Nachteile verbessern. Bedingt durch Schwierigkeiten beim Verfahren der Hydrosilylierung sind bis heute jedoch keine MS-Polymere auf dem Markt, welche dreiwertige Silanendgruppen tragen.

Des weiteren gibt es einkomponentige feuchtigkeitshärtende Systeme auf der Basis silanendständiger Polyurethane. Es handelt sich dabei um Polyurethane, deren Isocyanat-Endgruppen mit gegenüber Isocyanat reaktiven Organosilanen umgesetzt sind, so dass die Polyurethan-Ketten des Prepolymers endständige Alkoxysilane aufweisen. Die Herstellung solcher silanendständiger Polyurethane ist grundlegend beschrieben in US 3 632 557 von Union Carbide, wobei die endständigen Isocyanatgruppen eines Polyurethan Prepolymers mit Aminosilanen oder Mercaptosilanen umgesetzt werden. Die Herstellung speziell geeigneter sekundärer Aminosilane sowie deren Anhängen an Isocyanatgruppen von Polyurethanen ist von Bayer in US 5 364 955 und Crompton Corp. in WO 01/16201 beschrieben. Ein anderer Weg zur Herstellung silanendständiger Polyurethane wird von Witco in EP 931 800 beschrieben. Dabei werden OH-endständige Polyurethane mit Isocyanatosilanen umgesetzt. Auf diesem Weg werden zwar silanendständige Polyurethane mit etwas tieferer Viskosität erhalten, die für diesen Weg benötigten Isocyanatosilane sind jedoch wegen technischer Schwierigkeiten bei der Herstellung kommerziell schwierig zu erhalten, oder sehr teuer. Bei der Aushärtung hydrolysieren diese silanendständigen Polyurethane, wie bereits vorher bei den MS-Polymeren beschrieben, mit Feuchtigkeit zu Alkoholen und die entstehenden Si-OH Gruppen kondensieren anschliessend zu Si-O-Si Bindungen. Die silanendständigen Polyurethane weisen im Vergleich zu den MS-Polymeren ein deutlich besseres Rückstellvermögen auf. Ein Nachteil ist jedoch ihre relativ hohe Viskosität, bedingt durch Harnstoff-Gruppen am Ende der Polymerketten, welche durch die Reaktion der Isocyanatgruppen mit den Aminosilanen entstehen. Um leicht auspressbare Baudichtstoffe zu formulieren ist deshalb relativ viel Weichmacher notwendig. Der hohe Weichmacheranteil erniedrigt zwar die Viskosität des Systems, macht jedoch auch die Oberfläche klebriger und verschlechtert die Haftungseigenschaften des Dichtstoffes.

Auch bereits bekannt sind nichtreaktive Silikonfluide, u.a. auf der Basis von Polydimethylsiloxan. Diese werden gemäss Ullmann's Encyclopedia of Industrial Chemistry, Vol A 24, 1993, S. 69 angewendet u.a. als hitzeleitendes Medium, als Kühlmittel, als Trennmittel in der Herstellung von Plastik- und Kautschukartikeln, als Polituren, als wasserabstossende Beschichtung auf Textilien, als Entschäumer und als Schmiermittel. Ebenfalls beschrieben ist der Einsatz solcher nichtfunktioneller Polydimethylsiloxan Fluids als Weichmacher für Silikon Elastomere, z.B. in Ullmann's Encyclopedia of Industrial Chemistry, Vol A 24, 1993, S. 76. Der Einsatz solcher nichtreaktiver Polydimethylsiloxan Fluids in Dichtstoffen basierend auf silanendständigen Polyurethanen wird nirgends beschrieben oder nahegelegt.

Ausgehend vom heutigen Stand der Technik besteht ein Bedarf für einen silanvernetzenden Baudichtstoff mit guter Auspressbarkeit, trockener Oberfläche, gutem Rückstellvermögen und guter Haftung auf porösen Untergründen.

Überraschenderweise wurde gefunden, dass durch die Zugabe eines Anteils Silikonfluid anstelle eines üblichen Weichmachers Baudichtstoffe auf der Basis silanendständiger Polyurethane formuliert werden können, welche eine trockenere Oberfläche und bessere Haftungen auf porösen Untergründen aufweisen verglichen mit solchen ohne Silikonfluid. Ebenfalls verbessert wird die Abglättbarkeit des frisch applizierten Dichtstoffes. Beim geeigneten Silikonfluid handelt es sich um ein nichtreaktives Polydimethylsiloxan, welches weder Alkoxygruppen noch Si-OH Gruppen enthält.

Gegenstand der Erfindung ist ein Kleb- oder Dichtstoff, insbesondere Baudichtstoff, bestehend aus mindestens den drei folgenden Komponenten:
a) mindestens ein silanvernetzendes Polyurethan-Polymer der Formel (I) 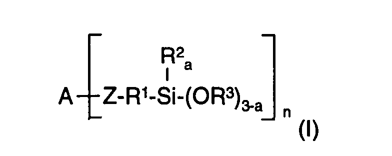 wobei
   R¹ für eine Alkylgruppe mit 2 bis 8 C-Atomen, linear oder verzweigt, steht,
   R² für einen Alkylrest mit 1 bis 8 C-Atomen steht,
   R³ für einen Alkylrest mit 1 bis 5 C-Atomen steht,
   a für 0 oder 1 steht,
   Z für einen Schwefel oder ein NR⁴ steht, wobei R⁴ für ein Wasserstoffatom oder einen organischen Rest steht, beispielsweise eine Alkylgruppe oder eine Arylgruppe mit 1 bis 20 C-Atomen, oder eine Verbindung mit Estergruppen wie beispielsweise eine Gruppierung der Formel (II) 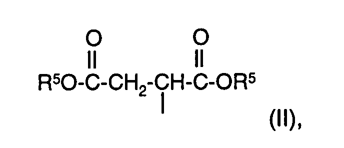 wobei R⁵ für eine Alkylgruppe mit 1 bis 8 C-Atomen steht,
   n eine Zahl von 2 bis 4 bedeutet,
   und A für einen Rest eines Polyurethan-Prepolymers mit der Funktionalität n steht,
b) Silikonfluid, bestehend aus einem nichtreaktiven Polydimethylsiloxan gemäss Formel (III) 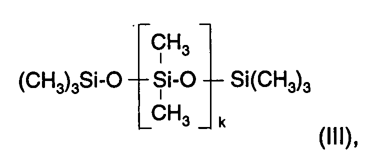 wobei k so gewählt ist, dass das Polydimethylsiloxan eine Viskosität im Bereich 50 bis 1000 Centistokes aufweist.
c) mindestens ein siliziumfreier Weichmacher für Polyurethan,
   und wobei auf 100 Teile Polymer a) 10 bis 40 Teile, vorzugsweise 15-35 Teile, Silikonfluid b) eingesetzt werden, und der Anteil Silikonfluid b) plus Weichmacher c) zusammen 80 bis 160 Teile, bevorzugt 120 - 140 Teile, bezogen auf 100 Teile Polymer a) beträgt.

Vorzugsweise steht A für einen Polyurethanrest, der erhältlich ist durch Umsetzung von handelsüblichen Polyolen mit einem Überschuss an handelsüblichen Polyisocyanaten, wobei das mittlere Molekulargewicht von A üblicherweise im Bereich von 500 bis 100'000 g/mol liegt, und A mindestens n Urethangruppen enthält. Insbesondere bedeutet A einen Rest der Formel (IV) 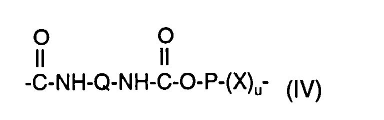 wobei Q für einen aromatischen, aliphatischen oder cycloaliphatischen Rest steht, welcher insbesondere ein Polyisocyanat, speziell bevorzugt ein handelsübliches Diisocyanat, nach Abspaltung von zwei oder mehr Isocyanatgruppen darstellt, und

P für einen Rest steht, welcher ein Polyoxyalkylen-Polyol oder ein Polyalkyliden-Polyol, insbesondere ein handelsübliches Polyol, nach Abspaltung von mindestens zwei OH-Gruppen darstellt,
und X einen Rest der Formel (V) bedeutet 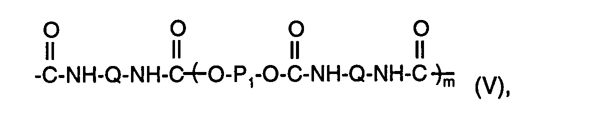 wobei m unabhängig voneinander 0 bis 5 bedeutet und wobei
Q die obengenannte Bedeutung hat und wobei
P₁ = P ist oder P(X)ᵤ ist und wobei
u = 1 oder 2 ist.

Ein geeignetes silanvernetzende Polyurethan-Prepolymer ist herstellbar durch "Anhängen" von silangruppenenthaltenden Verbindungen an aus Polyisocyanat und Polyol gebildete Prepolymere.

Bevorzugte Polyisocyanate sind Diisocyanate. Als Beispiele seien die folgenden, in der Polyurethanchemie bestens bekannten Isocyanate erwähnt:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, 1,6-Hexamethylendiisocyanat, m- und p-Tetramethylxylylendiisocyanat, die Isomeren des 4,4'-oder 2,4'-Dicyclohexylmethandiisocyanates, Polymere oder Oligomere dieser Isocyanate, sowie Mischungen aus zwei oder mehr der angegebenen Isocyanate.

Polyole, die nach Abspaltung von mindestens zwei OH-Gruppen den Rest P ergeben, sind vorzugsweise die folgenden, in der Polyurethanchemie bestens bekannten Rohstoffe oder Mischungen davon:

Polyetherpolyole, welche das Polymerisationsprodukt aus Ethylenoxid, Propylenoxid oder Butylenoxid oder Mischungen davon sind, oder hydroxyterminierte Polybutadienpolymere. Die Polyole weisen im allgemeinen eine OH-Funktionalität von 1.8 bis 3 und ein Molekulargewicht von 500 bis 20000 g/mol auf. Zusätzlich zu den genannten Polyolen können bei der Herstellung Verbindungen mit zwei oder mehr OH-Gruppen als Kettenverlängerer oder Vernetzer mitverwendet werden, so dass deren Reste ebenfalls zu P beitragen können. Als Beispiele seien 1,4-Butandiol oder Trimethylolpropan genannt.

Die erfindungsgemäss eingesetzten silanterminierten Prepolymere können hergestellt werden, indem - in einem ersten Schritt - Polyole mit einem Überschuss Polyisocyanat umgesetzt werden, so dass ein Prepolymer mit Isocyanat-Endgruppen entsteht. Diese Isocyanat-Endgruppen werden anschliessend mit einem organofunktionellen Silan, welches eine mit Isocyanaten reaktive Gruppe enthält, umgesetzt.

Als organofunktionelle Silane sind Verbindungen mit der Formel (VI) 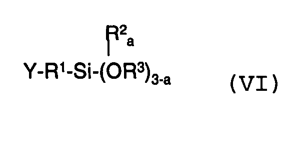 geeignet, wobei R¹, R², R³ und a die oben beschriebene Bedeutung haben, und Y für -SH oder -NH₂ oder -NHR⁴ steht, und R⁴ ebenfalls die oben beschriebene Bedeutung hat. Besonders geeigent ist ein Aminosilan, welches als R⁴ die folgende Gruppierung (II) aufweist 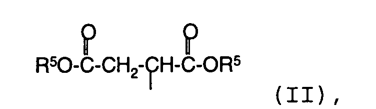 wobei R⁵ für eine Alkylgruppe mit 1 bis 8 C-Atomen steht.

Solche organofunktionellen Silane können aus dem entsprechenden Maleinsäure- oder Fumarsäure-Diester und einem Aminosilan mit Y = -NH₂ durch eine Additionsreaktion an die Doppelbindung hergestellt werden. Als Beispiel einer solchen organofunktionellen Silanverbindung sei die folgende genannt, hergestellt aus Maleinsäurediethylester und γ-Aminopropyltrimethoxysilan:

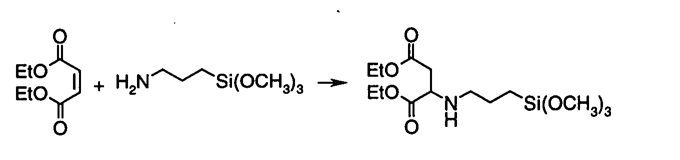

Als Polyole können die bereits oben als "Lieferanten" des Restes P genannten, in der Polyurethanchemie bestens bekannten Rohstoffe oder Mischungen davon eingesetzt werden.

Als Polyisocyanate zur Herstellung eines solchen Prepolymers kommen die ebenfalls bereits oben als "Lieferanten" des Restes Q genannten aliphatischen, cycloaliphatischen oder aromatischen Isocyanate mit mindestens zwei Isocyanatgruppen pro Molekül in Frage.

Die Herstellung kann dadurch erfolgen, dass die Polyol- und die Isocyanatkomponente mit üblichen Verfahren, z.B. bei Temperaturen von 50 bis 100°C, gegebenenfalls unter Mitverwendung geeigneter Katalysatoren, umgesetzt werden, wobei die Isocyanatkomponente im Überschuss eingesetzt wird. Als Reaktionsprodukt entsteht das erwähnte Polyurethan Prepolymer mit Isocyanat-Endgruppen. Dieses wird anschliessend umgesetzt mit dem beschriebenen isocyanatreaktiven organofunktionellen Silan, wobei das erwähnte silanendständige Polyurethan Prepolymer gebildet wird. Das organofunktionelle Silan wird dabei stöchiometrisch oder in einem leichten Überschuss im Verhältnis zu den Isocyanatgruppen eingesetzt.

Als unter b) beschriebenes Silikonfluid eignet sich nichtreaktives Polydimethylsiloxan, aufgebaut nach der Formel (III), 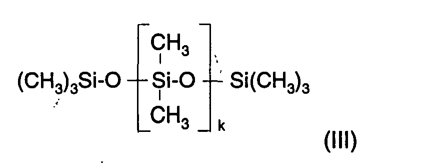 wobei k den durchschnittlichen Polymerisationgrad bezeichnet und so gewählt ist, dass das Polydimethylsiloxan eine Viskosität im Bereich 50 bis 1000 Centistokes aufweist, bevorzugt 200 - 500 Centistokes, speziell bevorzugt 300-400 Centistokes. Ein Beispiel für ein bevorzugtes Polydimethylsiloxan ist Dow Corning Fluid 200 mit Viskosität 350 Centistokes, erhältlich von Dow Corning.

Die unter c) genannten siliziumfreien Weichmacher sind insbesondere handelsübliche Weichmacher für Polyurethan. Bei diesen handelt es sich um Ester organischer Säuren, insbesondere von Isobuttersäure, Benzoesäure, Phthalsäure, Adipinsäure und Sebacinsäure. Zur Veresterung dieser Säuren können Monoalkohole oder mehrfunktionelle Alkohole verwendet worden sein. Der Weichmacher kann auch aus einer Mischungen von mehreren dieser Esterverbindungen bestehen.

Besonders erwähnt seien Diisodecylphthalat, Dioctylphthalat und Dioctyladipat.

Neben diesen notwendigerweise anwesenden Komponenten kann der erfindungsgemässe Klebstoff einen oder mehrere der folgenden Bestandteile enthalten:

Anorganische Füllstoffe wie z.B. Calciumcarbonate, insbesondere feinteiliges beschichtetes Calciumcarbonat, Kaoline, Aluminiumoxide oder Kieselsäuren, organische Füllstoffe wie z.B. Russ, Fasern, z.B. aus Polyethylen, Pigmente, Verdickungsmittel wie z.B. Harnstoffverbindungen oder Polyamidwachse, Stabilisatoren gegen Wärme oder UV, Haftvermittler wie z.B. Aminosilane oder Epoxysilane, insbesondere γ-Aminopropyl-trimethoxysilan, N-β-(Aminoethyl)-γ-aminopropyltrimethoxysilan oder Bis-(3-(trimethoxysilyl)-propyl)amin, Trocknungsmittel, beispielsweise Vinyltrimethoxysilan, Katalysatoren, beispielsweise Aminverbindungen wie z.B. Isophorondiamin oder Jeffamine, oder Organozinnverbindungen, wie z.B. Dibutylzinndilaurat, Dibutylzinnacetylacetonat oder andere in der Polyurethanchemie übliche Katalysatoren, Lösemittel, sowie weitere in Polyurethan Dicht- und Klebstoffen üblicherweise eingesetzte Substanzen.

Die erfindungsgemässen Dichtstoffe sind insbesondere Baudichtstoffe. Diese weisen gegenüber dem Stand der Technik von Baudichtstoffen basierend auf silanendständigen Polyurethanen den Vorteil auf, dass sie trotz hohem Weichmachergehalt eine trockene Oberfläche und gute Haftung auf porösen Untergründen aufweisen. Dieser Befund überrascht, da Silikonfluide bisher als nicht verträglich beim Einsatz in Polymeren, welche nicht Silikon sind, angesehen wurden. Werden Silikonfluide ausserhalb des erfindungsgemässen Bereiches eingesetzt, wird die beschriebene Verbesserung der Oberfläche und der Haftung nicht erreicht. Bei Einsatz geringerer Mengen an Silikonfluid nimmt die Klebrigkeit der Oberfläche zu. Beim Einsatz höherer Mengen an Silikonfluid schwitzt dieses aus der Dichtstoffmasse aus und bewirkt eine ölige Oberfläche, was zu einer Verschmutzung der Fugenflanken sowie zu deutlich schlechteren Haftungseigenschaften führt.

### Beispiele

| Verwendete Ausgangsmaterialien: | |
|---|---|
| Silikon Fluid | Dow Corning 200 Fluid / 350 Centistokes , Hersteller Dow Corning |
| Kreide | Socal U1S2, Hersteller Solvay |
| MS-Polymer | MS S 203H und MS S 303H im Verhältnis 2/1, bei de von Kaneka |
| Polyamid-Verdickungsmittel | Crayvallac super, Hersteller Crayvalley |
| Pigmente | Titandioxid / Eisenoxid schwarz (10:1), Hersteller Bayer |
| Weichmacher | Diisodecylphthalat von BASF |
| UV Absorber | Tinuvin 327, Hersteller Ciba Specialties |
| Katalysator | Dibutylzinndilaurat |
| Aminosilan | N-β-(Aminoethyl)-γ-aminopropyltrimethoxysilan |
| Vinylsilan | Vinyltrimethoxysilan |

### Beschreibung der Prüfmethoden:

Die Auspresskraft wurde ermittelt an Aluminiumkartuschen mit einem Durchmesser von 45 mm, wobei der Klebstoff an der Kartuschenspitze durch eine Öffnung von 3 mm gepresst wurde. Das Auspressen erfolgte durch eine Zugprüfmaschine unter Aufnahme der erforderlichen Kraft, mit einer Geschwindigkeit von 60 mm/min.

Das Abglättverhalten wurde bestimmt, indem eine frisch applizierte Dichtstoffraupe mit dem mit Seifenwasser benetzten Finger in die gewünschte Form modelliert wurde. Das Abglättverhalten wird als gut bezeichnet, wenn das Seifenwasser klar bleibt, der Finger nicht am Dichtstoff kleben bleibt und sich die gewünschte Form leicht modellieren lässt, ohne dass die Umgebung mit Dichtstoffspuren verschmutzt wird.

Die Oberfläche des ausgehärteten Dichtstoffes wurde beurteilt, indem diese mit dem Finger leicht berührt und so deren Klebrigkeit geprüft wurde.

Das Rückstellvermögen wurde bestimmt nach DIN EN 27389 mit Betonprüfkörpern.

Das E-Modul (Spannung bei 100% Dehnung) wurde geprüft nach DIN EN 28339, Verfahren A, wobei im Zugversuch die Spannung bei 100% Dehnung ermittelt wurde.

Die Haftung auf Beton, Holz und Backstein wurde geprüft, indem eine Dichtstoffraupe auf den entsprechenden Untergrund appliziert und während 4 Wochen bei Raumtemperatur ausgehärtet wurde. Anschliessend wurde versucht, die ausgehärtete Raupe vom Untergrund abzuschälen. Bewertet wurde das Haftbild gemäss folgender Skala:

| | | |
|---|---|---|
| 1 | 100% Kohäsivbruch der Raupe | (= sehr gute Haftung) |
| 2 | über 90% Kohäsivbruch der Raupe | |
| 3 | über 50% Kohäsivbruch der Raupe | |
| 4 | weniger als 50% Kohäsivbruch der Raupe | |
| 5 | weniger als 25% Kohäsivbruch der Raupe | (= sehr schlechte Haftung) |

### Beispiel 1:

### N-(3-Trimethoxysilylpropyl)-asparaginsäurediethylester (Maleinsäureester-Aminosilan-Addukt)

509.9 g γ-Aminopropyltrimethoxysilan wurden vorgelegt. Unter gutem Rühren wurden bei Raumtemperatur anschliessend langsam 490.1 g Maleinsäurediethylester tropfenweise zugegeben. Der Temperaturanstieg, bedingt durch die exotherme Reaktion, wurde durch Kühlung in einem Wasserbad bei 30°C gestoppt. Die Mischung wurde anschliessend während 8 Stunden bei Raumtemperatur gerührt, bis die Umsetzung abgeschlossen war.

### Beispiel 2:

### Silanterminiertes Polyurethan Prepolymer

1000g Polyol PPG 12000, 35.3 g Isophorondiisocyanat und 0.25 g Dibutylzinndilaurat wurden unter stetigem Rühren auf 90°C aufgeheizt und auf dieser Temperatur belassen, bis der Gehalt an freien Isocyanatgruppen einen Wert von 0.4% erreichte. Anschliessend wurden 34.7 g N-(3-Trimethoxysilylpropyl)-asparaginsäurediethylester aus Beispiel 1 eingemischt und die Mischung wurde während ca. 4 Stunden bei 90°C gerührt, bis kein freies Isocyanat mittels IR-Spektroskopie mehr nachgewiesen werden konnte. Anschliessend wurde das Prepolymer auf Raumtemperatur abgekühlt und unter Ausschluss von Feuchtigkeit aufbewahrt.

### Beispiel 3:

### Harnstoff-Verdickungsmittel

In einem Vakuummischer wurden 100 Teile Weichmacher und 16 Teile 4,4'-Diphenylmethandiisocyanat vorgelegt und leicht aufgewärmt. Dann wurden unter starkem Rühren 9 Teile Monobutylamin langsam zugetropft. Die entstehende weisse Paste wurde unter Vakuum und Kühlung eine Stunde weitergerührt.

### Beispiele 4, 5 und Vergleichsbeispiele 1 bis 4:

### Dichtstoffe

Die Dichtstoffe wurden hergestellt, indem alle Komponenten gemäss Tabelle 1 in einem Vakuum-Mischer zu einer knollenfreien Dichtstoffpaste verarbeitet wurden und diese anschliessend in luftdichte Kartuschen abgefüllt wurde.

Die Menge Polymer/Weichmacher/Füllstoff wurde für die Dichtstoff-Beispiele so gewählt, dass ein gut auspressbarer Dichtstoff mit einer Auspresskraft von 400 bis 600 N erhalten wurde.

Als Verdickungsmittel wurde dasjenige gewählt, welches am besten geeignet ist für das entsprechende Polymersystem, d.h. entweder das Polyamid-Verdickungsmittel oder das Harnstoff-Verdickungsmittel gemäss Beispiel 3.

Der Katalysator wurde so dosiert, dass eine Hautbildungszeit von ein bis zwei Stunden erhalten wurde.

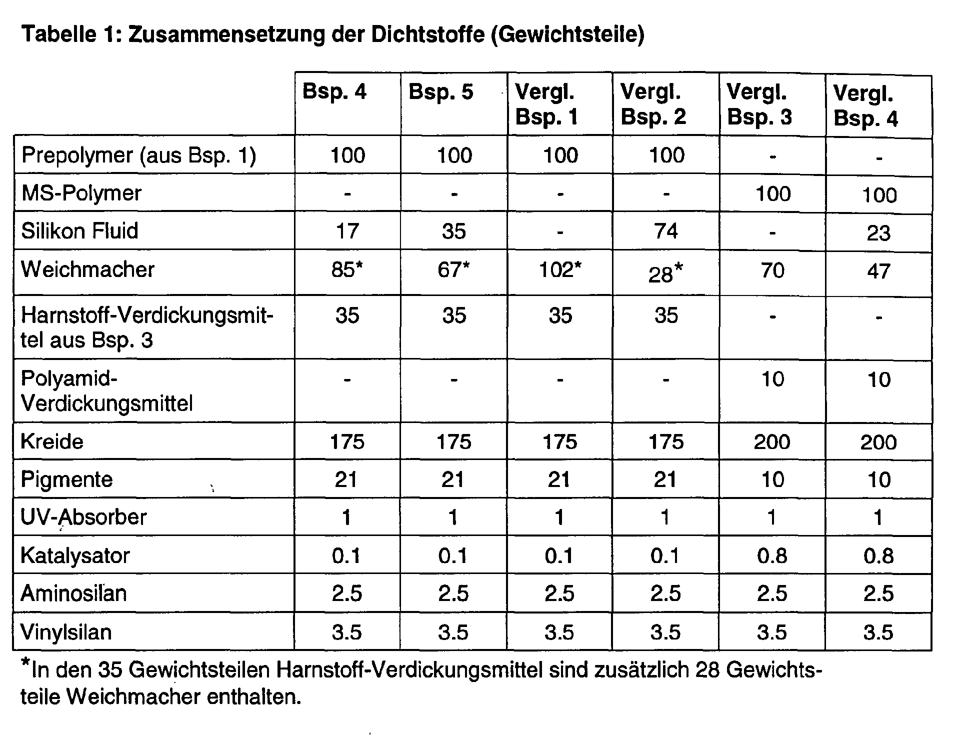

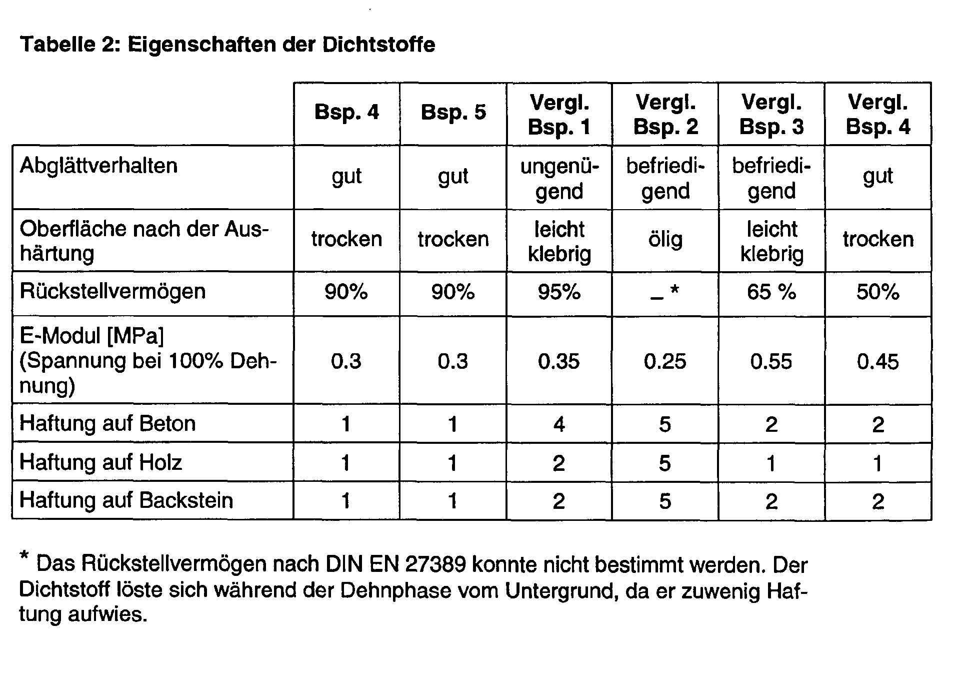

### Beurteilung der Resultate aus den Beispielen:

Die erfindungsgemässen Dichtstoffe aus Beispiel 4 und 5 weisen ein gutes Abglättverhalten, eine trockene Oberfläche nach der Aushärtung, ein hohes Rückstellvermögen von 90%, ein tiefes E-Modul von 0.3 MPa und eine sehr gute Haftung auf porösen Untergründen wie Beton, Holz und Backstein auf.

Der Dichtstoff aus Vergleichsbeispiel 1, welcher kein Silikonfluid enthält, zeigt ein schlechteres Abglättverhalten, weist eine leicht klebrige Oberfläche auf und hat eine deutlich schlechtere Haftung auf den genannten Untergründen, vor allem auf Beton.

Beim Dichtstoff aus Vergleichsbeispiel 2, welcher sehr viel Silikonfluid enthält, schwitzt das Silikonfluid aus, so dass die Oberfläche nach der Aushärtung ölig ist. Die Haftungseigenschaften des Dichtsoffes werden durch das austretende Silikonfluid stark verschlechtert.

Die Dichtstoffe aus Vergleichsbeispiel 3 und 4 wurden mit MS-Polymer statt mit dem erfindungsgemässen einzusetzenden Polymer aus Beispiel 2 hergestellt. Vergleichsbeispiel 3 ohne Silikonfluid weist eine leicht klebrige Oberfläche auf, sowie ein schlechtes Rückstellvermögen von lediglich 65%. Die Zugabe von Silikonfluid in Vergleichsbeispiel 4 zeigt zwar eine Verbesserung bei der Dichtstoffoberfläche, das Rückstellvermögen wird jedoch noch schlechter und beträgt nur noch 50%, was für einen Dichtstoff für Fugen, welche sich bewegen, absolut ungenügend ist.

## Patentansprüche

1. Kleb- oder Dichtstoff, bestehend aus mindestens den drei folgenden Komponenten:
a) mindestens ein silanvernetzendes Polyurethan-Polymer der Formel (I) 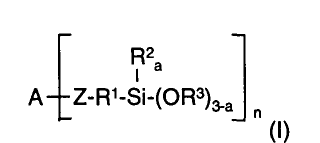 wobei
R¹ für eine Alkylgruppe mit 2 bis 8 C-Atomen, linear oder verzweigt, steht,
R² für einen Alkylrest mit 1 bis 8 C-Atomen steht,
R³ für einen Alkylrest mit 1 bis 5 C-Atomen steht,
a für 0 oder 1 steht,
Z für einen Schwefel oder ein NR⁴ steht, wobei R⁴ für ein Wasserstoffatom oder einen organischen Rest steht, beispielsweise eine Alkylgruppe oder eine Arylgruppe mit 1 bis 20 C-Atomen, oder eine Verbindung mit Estergruppen wie beispielsweise eine Gruppierung der Formel (II) 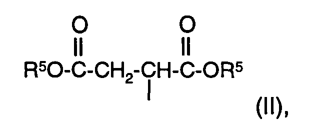 wobei R⁵ für eine Alkylgruppe mit 1 bis 8 C-Atomen steht,
n eine Zahl von 2 bis 4 bedeutet,
und A für einen Rest eines Polyurethan-Prepolymers mit der Funktionalität n steht,
b) Silikonfluid, bestehend aus einem nichtreaktiven Polydimethylsiloxan gemäss Formel (III) 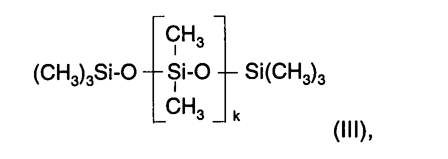 wobei k so gewählt ist, dass das Polydimethylsiloxan eine Viskosität im Bereich 50 bis 1000 Centistokes aufweist.
c) mindestens ein siliziumfreier Weichmacher für Polyurethan,
und wobei auf 100 Teile Polymer a) 10 bis 40 Teile Silikonfluid b) eingesetzt werden, und der Anteil Silikonfluid b) plus Weichmacher c) zusammen 80 bis 160 Teile, bezogen auf 100 Teile Polymer a) beträgt.

2. Kleb- oder Dichtstoff gemäss Anspruch 1, **dadurch gekennzeichnet, dass** A für einen Polyurethanrest steht, der erhältlich ist durch Umsetzung mindestens eines Polyols, vorzugsweise mindestens eines handelsüblichen Polyols, mit einem Überschuss an mindestens einem Polyisocyanat, insbesondere mindestens einem handelsüblichen Polyisocyanat, wobei das mittlere Molekulargewicht von A üblicherweise im Bereich von 500 bis 100'000 g/mol liegt, und A mindestens n Urethangruppen enthält.

3. Kleb- oder Dichtstoff gemäss Anspruch 2, **dadurch gekennzeichnet, dass** A einen Rest der Formel (IV) 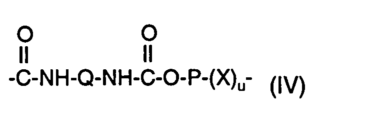 wobei Q für einen aromatischen, aliphatischen oder cycloaliphatischen Rest steht, welcher insbesondere ein Polyisocyanat, speziell bevorzugt ein handelsübliches Diisocyanat, nach Abspaltung von zwei oder mehr Isocyanatgruppen darstellt, und
P für einen Rest steht, welcher ein Polyoxyalkylen-Polyol oder ein Polyalkyliden-Polyol, insbesondere ein handelsübliches Polyol, nach Abspaltung von mindestens zwei OH-Gruppen darstellt,
und X einen Rest der Formel (V) bedeutet 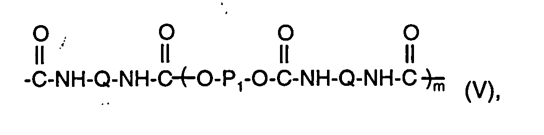 wobei m unabhängig voneinander 0 bis 5 bedeutet und wobei
Q die obengenannte Bedeutung hat und wobei
P₁ = P ist oder P(X)ᵤ ist und wobei
u = 1 oder 2 ist.

4. Kleb- oder Dichtstoff gemäss einem der vorangehenden Ansprüche, **dadurch gekennzeichnet, dass** k im Silikonfluid derart ist, dass das Silikonfluid eine Viskosität im Bereich von 200-500 Centistokes aufweist, insbesondere 300-400 Centistokes.

5. Kleb- oder Dichtstoff gemäss einem der vorangehenden Ansprüche, **dadurch gekennzeichnet, dass** die unter c) genannten siliziumfreien Weichmacher für Polyurethan ein Ester einer organischen Säure oder eine Mischung solcher Ester sind.

6. Kleb- oder Dichtstoff gemäss Anspruch 5, **dadurch gekennzeichnet, dass** die organische Säure ausgewählt ist aus Isobuttersäure, Benzoesäure, Phthalsäure, Adipinsäure und Sebacinsäure.

7. Kleb- und Dichtstoff gemäss Anspruch 5 oder 6, **dadurch gekennzeichnet, dass** die Ester aus der Veresterung mit mindestens einem Monoalkohol oder mindestens einem mehrfunktionellen Alkohol oder Mischungen derselben stammen.

8. Kleb- und Dichtstoff gemäss einem der Ansprüche 5 bis 7, **dadurch gekennzeichnet, dass** die Ester ausgewählt sind aus Diisodecylphthalaten, Dioctylphthalaten, Dioctyladipaten und Mischungen derselben.

9. Kleb- oder Dichtstoff gemäss einem der vorangehenden Ansprüche, **dadurch gekennzeichnet, dass** dieser zusätzlich einen oder mehrere der folgenden Bestandteile enthält:
Anorganische Füllstoffe, organische Füllstoffe, Pigmente, Verdickungsmittel, Stabilisatoren gegen Wärme oder UV, Haftvermittler, Trocknungsmittel, Katalysatoren und Lösemittel.

10. Verwendung des Kleb- oder Dichtstoffs gemäss einem der vorangehenden Ansprüche als Baudichtstoff, insbesondere für das Abdichten und Verkleben von Bauteilen.
